# EUROPEAN PATENT SPECIFICATION

(11) **EP 0 766 653 B1**
(45) Date of publication and mention of the grant of the patent: **23.12.1998**
(21) Application number: 95921821.5
(22) Date of filing: 02.06.1995
(51) Int. Cl.: C03C 13/06, C03C 1/00, C03C 1/02, C03B 1/02

(54) **PRODUCTION OF MINERAL FIBRES**
HERSTELLUNG VON MINERALFASERN
PRODUCTION DE FIBRES MINERALES

(30) Priority: 15.06.1994 GB 9412011
(43) Date of publication of application: 09.04.1997
(73) Proprietor: Rockwool International A/S, DK-2640 Hedehusene (DK)
(72) Inventor: SORENSEN, Lone, Moller, DK-3460 Birkerod (DK); JENSEN, Soren, Lund, DK-1055 Kobenhavn K (DK)
(74) Representative: Lawrence, Peter Robin Broughton
(86) International application number: EP9502109
(87) International publication number: WO9534516

(56) References cited:
- WO-A-92/04289
- PATENT ABSTRACTS OF JAPAN vol. 5, no. 12 (C-040) 24 January 1981 & JP,A,55 140 725 (HIYOUGOKEN) 04 November 1980

## Description

This invention relates to the production of Man Made Vitreous Fibres (MMVF) that are biologically soluble, that is to say they have an acceptable rate of biologically useful degradation in physiological saline solution.

It is well known to form in a furnace, such as an electric furnace or a cupola furnace, a mineral melt and to use this melt for various industrial purposes. The mineral melt is generally formed from a blend of minerals selected so that they produce a melt having the desired melting point and other properties, having regard to the intended end use. The mineral materials are usually freshly produced or mined materials such as crushed rock or crushed slag and sand.

In EP-A-508589 it is proposed to form a melt from a plurality of solid waste streams that are used in proportions such that the melt has a content within certain defined ranges. Materials that are mentioned for use as this plurality of waste streams are municipal incinerator bottom ash, hazardous wastes incinerator bottom ash, baghouse or precipitator dust, steel plant dust, electroplating sludge, electrochemical machining sludge, waste foundry sands, contaminated soils, dried and contaminated sewage solids, cementitious fixation, coal combustion fly ash, inorganic paint pigment residues and spent refractory materials. The furnace can be a coke-fired cupola furnace of the type used in the grey iron casting industry. The melt is drained from the furnace under conditions that allow separation of free metal from the solution of oxides, which can be poured into moulds or quenched.

In JP-A-55 140 725, a melted blend of steel-making slag and one or more of mine slime, waste enamel and waste molding sand is converted into fibres by dropping.

When MMV fibres are formed from a melt, the composition of the fibres influences their properties. It is known that the solubility of MMV fibres in physiological saline solutions can be increased by appropriate selection of the composition of the melt. As a generality, best results are obtained when the amount of aluminium in the melt, measured as oxides, is below 3 or 4% by weight Al₂O₃. Accordingly, if biological solubility is required the mineral material for forming the briquettes, and any additional material that is included in the charge, has to be selected so that it complies both with the required low aluminium content and with the requirement that the melt has appropriate melt properties. Thus the charge must have appropriate melting temperature and viscosity characteristics such that the melt has appropriate fibre-forming properties.

Mineral fibres are generally made by a process comprising forming moulded briquettes of particulate mineral material, forming a melt by melting in a furnace a mineral charge comprising such briquettes and forming fibres from the melt. The components of the mineral charge have to be selected so as to provide a melt having appropriate melt properties and fibre-forming properties and this places constraints on the materials that can be used. When it is desired that the melt should have a low alumina content, this imposes further constraints on the choice of materials for the mineral charge. Materials that have low alumina content and that might be thought to be suitable tend to be rather expensive and some of these materials tend to provide a melt having inconvenient melt properties, for instance a rather high melting point. In practice therefore it is necessary to use very expensive blends of materials for forming biologically soluble MMV fibres, and this represents a serious impediment to the availability of such fibres.

It would therefore be desirable to be able to select minerals that are much more readily available and cheaper and yet which are capable of being used to give a fibre-forming melt having a low content of Al₂O₃.

In the invention, MMV fibres are made by a method comprising forming moulded briquettes of particulate mineral material, forming a melt by melting in a furnace a mineral charge comprising the briquettes and forming fibres from the melt, and in this method the melt and the fibres have a content, measured as oxides, that includes alumina in an amount of up to 4% by weight and the briquettes are formed of particulate mineral material that includes contaminated foundry sand.

contaminated foundry sand is foundry sand that has been used for making a foundry mould and that is still contaminated with a substantial proportion of the impurities that are present in the foundry sand after its use as a foundry mould. Thus it is contaminated with residues of binder, such as phenol formaldehyde resin, furan, bentonite or other foundry binder, and often with residues of metal, from the casting operation. The presence of these various residues has resulted in it generally being considered that the foundry sand cannot be used for any useful process unless it is first subjected to thermo/mechanical regeneration process comprising the steps of crushing, sieving, washing and incinerating to remove the contaminants and fines. However such reclamation processes tend to be very expensive and so render the use of the reclaimed sand uneconomic. For instance such a process is described in Mineral Processing No.8, August 1987, pages 456 to 462 by Bauer, where the significant process stages are magnetic separation fluid bed treatment and counter flow baffling.

In the invention, the contaminated foundry sand is used without significant prior reclamation processes. Indeed, if any reclamation process is conducted, it is usually confined to sieving the sand.

Thus the invention simultaneously solves two problems, namely the need to find a way of economically utilising contaminated foundry sand, and the need to find a cost-effective mineral that can be used in a fibre-forming melt designed to produce fibres having low alumina content.

One advantage of the invention lies in the fact that it is not necessary to remove fines from the contaminated foundry sand before it may be used. As explained above, this was previously always considered necessary if the foundry sand was to be useful. Thus particularly economical use of contaminated foundry sand is made possible by the invention.

In fact, the presence of fines can be advantageous in the invention. Fines exhibit excellent melting properties in conventionally used melting processes. This is due to their need for shorter residence times at any given melting temperature than larger particle size foundry sand.

This feature means that it is possible to use higher amounts of high melting point materials such as contaminated foundry sand in the charge than would otherwise be possible. The presence of fine particle size foundry sand also minimises or eliminates the need to incorporate fluxing agents, and thus avoids the constraints they place on the choice of chemical compositions.

The amount of contaminated foundry sand is preferably at least 10%, usually at least 20% based on the total mineral charge and often at least 30%. Usually it is not more than 75%, and generally it is in the range 20 to 40 or 45% by weight of the total mineral charge.

The melt will generally have a content of CaO in the range 10 to 40% and a content of MgO in the range 5 to 30% (often 7 to 20%). Generally the total amount of CaO plus alkali is 10 to 48% and the total amount of MgO + FeO is in the range 7 to 30%. The amount of SiO₂ is generally in the range 35 to 75%. Preferably the blend is such that the total alumina content is below 3% and often below 1%. The blend can contain various compounds additional to the alumina, CaO, MgO, alkali and FeO and SiO₂ contents mentioned above. Thus it may contain other elements such as phosphorous, boron and titanium, generally each in an amount of not more than 10% measured as oxide.

It tends to be unsatisfactory to use briquettes which individually have a composition that is very high in silica and very low in CaO and/or MgO, particularly because such a briquette is likely to have a rather high melting point. Accordingly it is preferred that substantially each briquette should have a content of Al₂O₃ of 0 to 4%, MgO 5 to 30% and CaO of 5 to 40%, all based on the weight of the briquette.

The desired chemical content may be achieved merely by mixing silica sand with olivine sand and a source of CaO, wherein generally all the sand is contaminated foundry sand but some could be uncontaminated sand. Often, however, the briquettes are formed from a blend of one or more contaminated foundry sands with other inorganic material, which may itself be industrial waste material. Suitable industrial waste materials include converter slag, glass, asbestos-free fibre cement, wood ash and steel plant dust and MMV fibre products, for instance bonded MMV fibrous material. This fibrous material may be recycled from the process or may be waste, previously manufactured, material.

The charge to the furnace may consist solely of the briquettes containing contaminated foundry sand or, more usually, is a mixture of at least 30%, often at least 50% and typically up to 80% or more, of such briquettes with other particulate material. This other material may comprise briquettes made from materials free of contaminated foundry sand and/or other mineral material suitable for incorporation in the melt. This additional mineral material may be industrial waste, as discussed above, or may be virgin mineral material that has not previously been used.

Such mineral material, that can be used as part of the non-briquette charge or as components in briquettes, can include materials such as dolomite, iron ore, limestone, rutile, magnesite, magnetite, brucite, burnt lime, slag and other materials suitable for forming a fibre-forming melt. The blend of contaminated foundry sand, other industrial waste and other mineral material should be such that the melt and the fibres have the desired composition.

The briquettes may be made by any suitable method. Generally they are made by bonding inorganic material using a binder, often associated with compression. The binder can be a hydraulic binder such as cement or may be a slag activated with an alkaline agent, as in W092/04289. The binder may alternatively be a burnt lime which is hydrated on heating in the presence of water-the well known lime/sandstone process. Alternatively, the binder may be an organic binder, for instance a lignin binder obtained by mixing calcium lignosulphonate with the particulate material in the presence of water, allowing curing to start and then subjecting the partially cured mix to compression moulding, for instance on a roller moulding machine.

The use of organic binder is advantageous as it avoids the introduction of alumina or other inorganic component that might place an additional constraint on the materials that can be used in the charge.

The briquettes may have conventional dimensions, for instance a minimum dimension of at least 5mm, often at least 20mm and usually at least 40mm and a maximum dimension of up to 300mm but usually not more than around 150 or 200mm.

The furnace may be heated in conventional manner, for instance as an electrical furnace or a tank furnace or, more usually by combustion of combustible material in a cupola furnace. The melt temperature will depend upon the minerals being used and the fibre-forming technique but is generally in the range 1200 to 1600°C, often around 1400 to 1550°C.

Fibre formation can be by conventional techniques such as a spinning cup technique or, preferably, by pouring on to a spinner comprising at least two co-operating spinning wheels, for instance as described in WO92/06047. Thus the fibres may be made by pouring the melt on to a first spinning rotor from which the melt is thrown in sequence on to one or more subsequent spinning rotors off which the fibres are thrown.

The products of the invention can be used for any of the conventional uses of MMV fibres, such as thermal insulation, noise reduction and regulation, fire protection, growth media, reinforcement and fillers.

The following are some examples of the invention:
Example 1 100% briquette charge (85% industrial waste)
   15% cement
   37% silica foundry sand
   19% olivine foundry sand
   29% converter slag
Example 2 100% briquette charge (57% industrial waste)
   13% cement
   21% glass waste
   26% silica foundry sand
   10% olivine foundry sand
   21% dolomite
   9% iron ore
Example 3 100% briquette charge (63% industrial waste)
   12% cement
   18% dolomite
   23% silica foundry sand
   10% olivine foundry sand
   10% glass waste
   20% mineral wool etc.
   7% iron ore
Example 4 89% briquette & 11% limestone (37% industrial waste)
   Briquette composition:
   12% cement
   42% silica foundry sand
   46% dolomite
Example 5 100% briquette (60% industrial waste)
   20% olivine
   31% silica foundry sand
   31% limestone
   9% burnt lime
Example 6 100% briquette (54% industrial waste)
   20% silica foundry sand
   46% dolomite
   14% glass waste
   20% mineral wool etc.
Example 7 100% briquette (65% industrial waste)
   12% cement
   36% silica sand
   17% olivine sand
   11% domomite
   12% iron ore
   12% mineral wool etc.

The chemical composition of the waste materials used in the examples is shown in Table 1 and characteristics of the charge and the products of each of the examples is shown in Table 2.

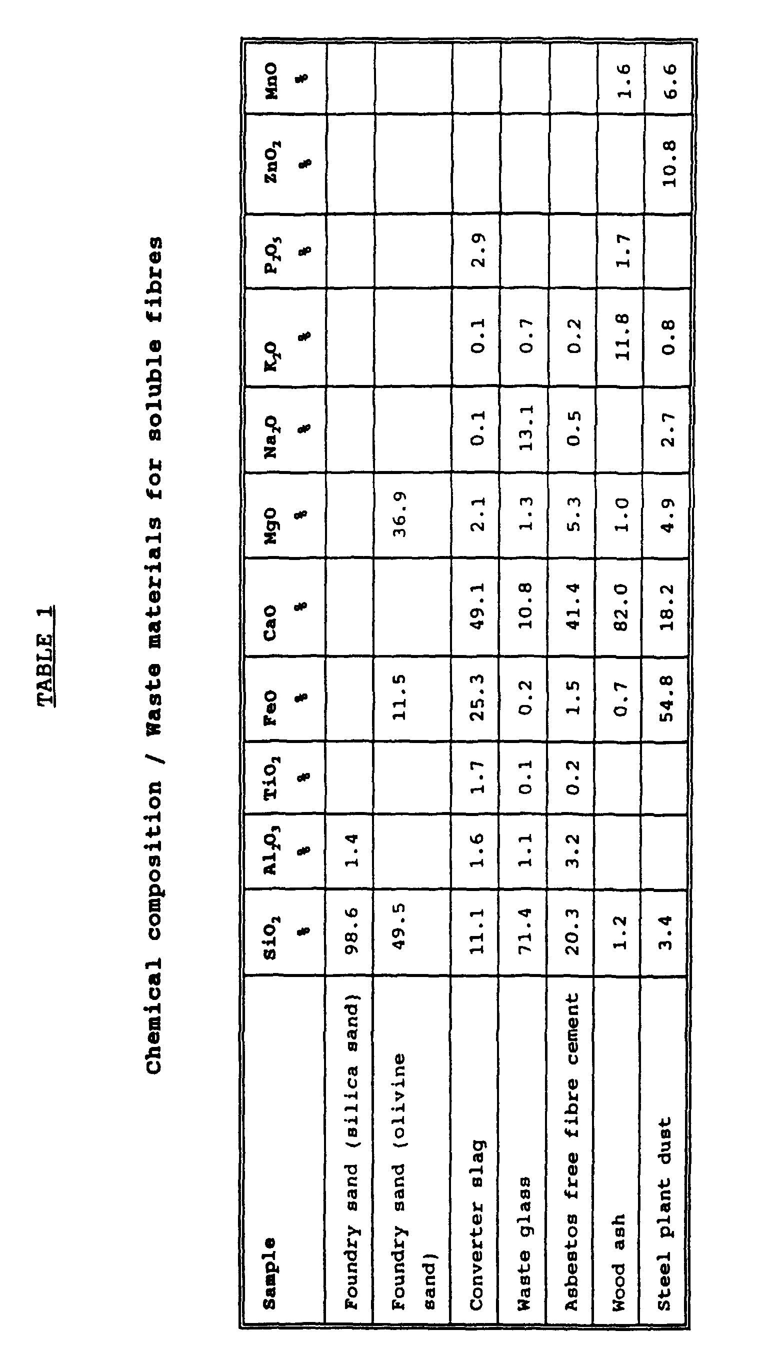

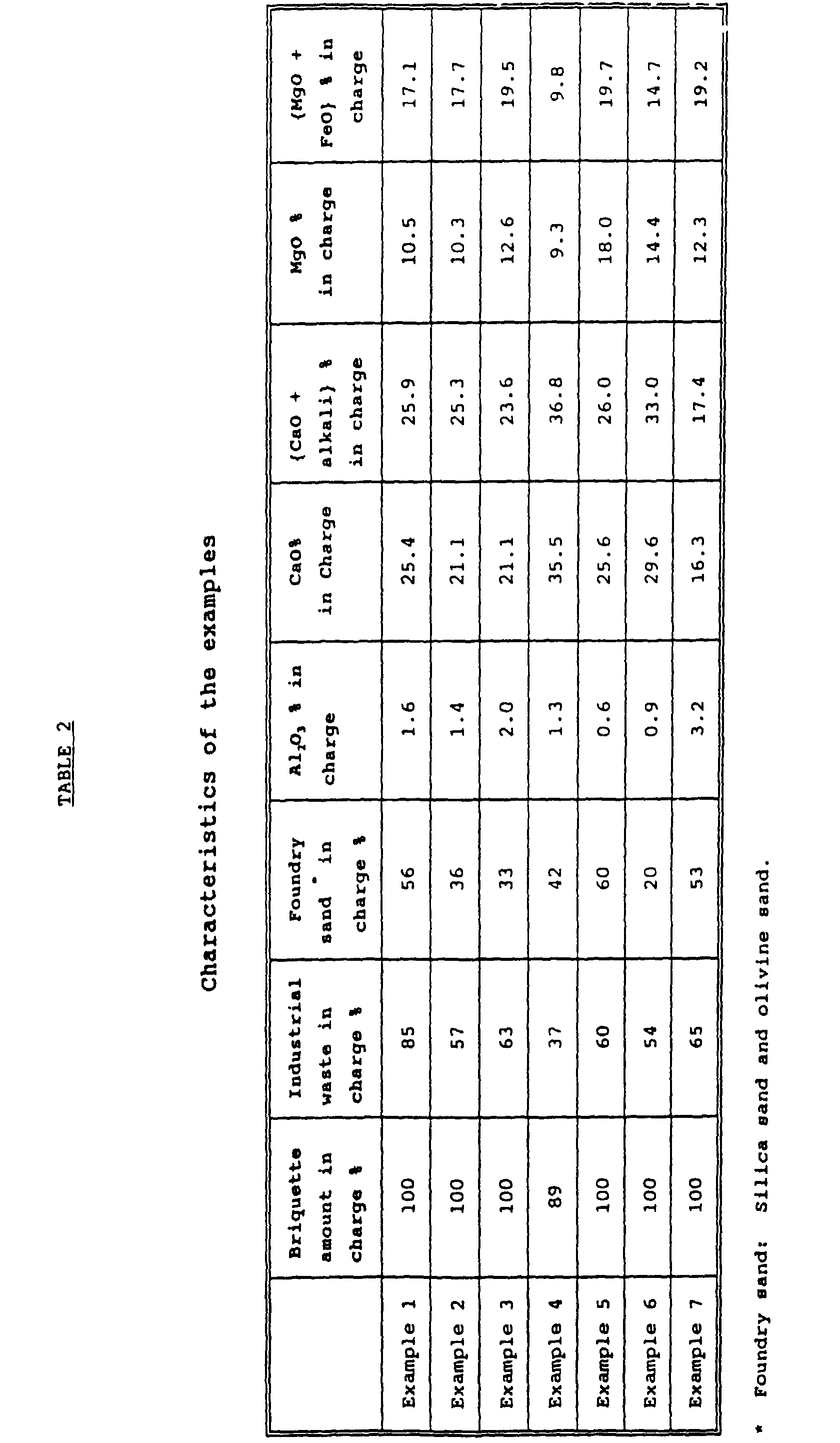

## Claims

1. A method of making man made vitreous fibres comprising forming moulded briquettes of particulate mineral material, forming a melt by melting in a furnace a charge comprising the briquettes and forming fibres from the melt, characterised in that the melt and the fibres have a content, measured as oxides, that includes Al₂O₃ in an amount of not more than 4% by weight and the briquettes are formed of particulate material that includes contaminated foundry sand.

2. A method according to claim 1 in which the briquettes are formed of particulate material that includes contaminated foundry sand in an amount of at least 10% by weight based on the total mineral charge.

3. A method according to claim 1 or claim 2 in which the amount of contaminated foundry sand in the briquettes is 10 to 70% based on the weight of the total mineral charge.

4. A method according to any preceding claim in which substantially each of the briquettes has a content of MgO of 5 to 30% and a content of CaO of 5 to 40% by weight.

5. A method according to any preceding claim in which the melt and fibres has a content which includes 0 to 4% Al₂O₃, 10 to 40% CaO, 5 to 30% MgO and 25 to 75% SiO₂, and other oxides each in an amount of not more than 20%.

6. A method according to claim 5 in which the amount of CaO plus alkali is 10 to 48% and the amount of MgO + FeO is 7 to 30%.

7. A method according to any preceding claim in which the briquettes are formed additionally from other industrial waste selected from converter slag, glass, asbestos-free fibre cement, wood ash, steel plant dust and man made vitreous fibre products, wherein the total amount of contaminated foundry sand and other industrial waste is at least 50% based on the total mineral charge.

8. A method according to any preceding claim in which the furnace is a cupola furnace.

9. A process according to any preceding claim in which the fibres are made by pouring the melt on to a first spinning rotor from which the melt is thrown in sequence on to one or more subsequent spinning rotors off which the fibres are thrown.

## Patentansprüche

1. Verfahren zur Herstellung von künstlichen glasartigen Fasern, umfassend das Bilden von geformten Briketts aus teilchenförmigem mineralischem Material, das Bilden einer Schmelze durch Schmelzen einer die Briketts umfassenden Charge in einem Ofen und das Bilden von Fasern aus der Schmelze, dadurch gekennzeichnet, daß die Schmelze und die Fasern einen Gehalt, gemessen als Oxide, haben, der Al₂O₃ in einer Menge von höchstens 4 Gewichts-% umfaßt, und die Briketts aus teilchenförmigem Material gebildet sind, das verunreinigten Formsand enthält.

2. Verfahren nach Anspruch 1, bei dem die Briketts aus teilchenförmigem Material gebildet sind, das verunreinigten Formsand in einer Menge von mindestens 10 Gewichts-%, bezogen auf die gesamte mineralische Charge, enthält.

3. Verfahren nach Anspruch 1 oder Anspruch 2, bei dem die Menge an verunreinigtem Formsand in den Briketts 10 bis 70%, bezogen auf das Gewicht der gesamten mineralischen Charge beträgt.

4. Verfahren nach irgendeinem vorhergehenden Anspruch, bei dem praktisch jedes der Briketts einen Gehalt an MgO von 5 bis 30% und einen Gehalt an CaO von 5 bis 40 Gewichts-% hat.

5. Verfahren nach irgendeinem vorhergehenden Anspruch, bei dem die Schmelze und die Fasern einen Gehalt haben, der 0 bis 4% Al₂O₃, 10 bis 40% CaO, 5 bis 30% MgO und 25 bis 75% SiO₂ und andere Oxide jeweils in einer Menge von höchstens 20% umfaßt.

6. Verfahren nach Anspruch 5, bei dem die Menge an CaO plus Alkali 10 bis 48% und die Menge an MgO + FeO 7 bis 30% beträgt.

7. Verfahren nach irgendeinem vorhergehenden Anspruch, bei dem die Briketts außerdem aus anderem unter Konverterschlacke, Glas, asbestfreiem Faserzement, Holzasche, Stahlwerkstaub und künstlichen glasartigen Faserprodukten ausgewählten Industrieabfall gebildet sind, wobei die Gesamtmenge an verunreinigtem Formsand und anderem Industrieabfall mindestens 50%, bezogen auf die gesamte mineralische Charge, beträgt.

8. Verfahren nach irgendeinem vorhergehenden Anspruch, bei dem der Ofen ein Kupolofen ist.

9. Verfahren nach irgendeinem vorhergehenden Anspruch, bei dem die Fasern hergestellt werden, indem die Schmelze auf einen ersten Spinnrotor gegossen wird, von dem die Schmelze der Reihe nach auf einen oder mehrere aufeinanderfolgende Spinnrotoren geschleudert wird, von denen die Fasern abgeschleudert werden.

## Revendications

1. Procédé de formation de fibres vitreuses artificielles comprenant la formation de briquettes moulées de matière minérale particulaire, la formation d'une masse fondue par fusion dans un four d'une charge comprenant les briquettes et la formation de fibres à partir de la masse fondue, caractérisé en ce que la masse fondue et les fibres ont une teneur, mesurée en oxydes, qui comprend Al₂O₃ en une quantité d'au plus 4% en masse et les briquettes sont formées de matière particulaire qui comprend du sable de fonderie contaminé.

2. Procédé selon la revendication 1, dans lequel les briquettes sont formées de matière particulaire qui comprend du sable de fonderie contaminé en une quantité d'au moins 10 % en masse par rapport à la charge minérale totale.

3. Procédé selon la revendication 1 ou la revendication 2, dans lequel la quantité de sable de fonderie contaminé dans les briquettes est de 10 à 70 % par rapport à la masse de la charge minérale totale.

4. Procédé selon l'une quelconque des revendications précédentes, dans lequel sensiblement chacune des briquettes a une teneur en MgO de 5 à 30 % et une teneur en CaO de 5 à 40 % en masse.

5. Procédé selon l'une quelconque des revendications précédentes, dans lequel la masse fondue et les fibres ont une teneur qui comprend 0 à 4 % de Al₂O₃, 10 à 40 % de CaO, 5 à 30 % de MgO et 25 à 75 % de SiO₂, et d'autres oxydes chacun en une quantité d'au plus 20 %.

6. Procédé selon la revendication 5, dans lequel la quantité de CaO plus alcali est de 10 à 48 % et la quantité de MgO + FeO est de 7 à 30 %.

7. Procédé selon l'une quelconque des revendications précédentes, dans lequel les briquettes sont formées en outre d'autres déchets industriels choisis parmi les scories de convertisseur, le verre, le ciment de fibres sans amiante, la cendre de bois, la poussière d'aciérie et des produits fibreux vitreux artificiels, où la quantité totale de sable de fonderie contaminé et d'autres déchets industriels est d'au moins 50 % par rapport à la charge minérale totale.

8. Procédé selon l'une quelconque des revendications précédentes, dans lequel le four est un cubilot.

9. Procédé selon l'une quelconque des revendications précédentes, dans lequel les fibres sont produites par déversement de la masse fondue sur un premier rotor en rotation depuis lequel la masse fondue et projetée successivement sur un ou plusieurs rotors en rotation subséquents depuis lesquels les fibres sont projetées.
